# EUROPÄISCHE PATENTANMELDUNG

(11) **EP 2 519 062 A1**
(43) Veröffentlichungstag der Anmeldung: **31.10.2012**
(21) Anmeldenummer: 11164335.9
(22) Anmeldetag: 29.04.2011
(51) Int. Cl.: H04W 52/24

(54) **Verfahren zum energieeffizienten Betrieb eines Kommunikationsnetzwerks**

(71) Anmelder: Siemens Aktiengesellschaft, 80333 München (DE)
(72) Erfinder: Glas, Karl, 91074 Herzogenaurach (DE)

(57) **Zusammenfassung**

Die Erfindung betrifft ein Verfahren zum Betrieb eines Kommunikationsnetzwerks (1), insbesondere eines Automatisierungssystems, wobei das Kommunikationsnetzwerk (1) einen oder mehrere drahtlose Zugangsrechner (110, 120, 130) sowie einen oder mehrere Teilnehmerrechner (111, 112, 113; 121, 122, 123; 131, 132, 133) umfasst. Erfindungsgemäß sind die Teilnehmerrechner (111, 112, 113; 121, 122, 123; 131, 132, 133) einem der drahtlosen Zugangsrechner (110, 120, 130) zugeordnet und können über eine Funkverbindung (115; 125; 135) mit dem zugeordneten drahtlosen Zugangsrechner (110, 120, 130) Daten austauschen. Hierbei wird für die Teilnehmerrechner (111, 112, 113; 121, 122, 123; 131, 132, 133) eine Verbindungsinformation ermittelt, welche eine gegenwärtige Signalqualität der Funkverbindung zwischen dem Teilnehmerrechner (111, 112, 113; 121, 122, 123; 131, 132, 133) und dem zugeordneten drahtlosen Zugangsrechner (110, 120, 130) repräsentiert. Weiter wird die Verbindungsinformation ausgewertet und überprüft, ob die ermittelte Signalqualität über einem vorgegebenen Schwellwert für die Signalqualität liegt. Die Sendeleistung des Zugangsrechners (110, 120, 130) wird derart reduziert, so dass die Signalqualität der diesem drahtlosen Zugangsrechner (110, 120, 130) zugeordneten Teilnehmerrechner (111, 112, 113; 121, 122, 123; 131, 132, 133) gerade über dem Schwellwert liegt.

## Beschreibung

Die Erfindung betrifft ein Verfahren zum Betrieb eines Kommunikationsnetzwerks, insbesondere eines Automatisierungssystem, wobei das Kommunikationsnetzwerk einen oder mehrere drahtlose Zugangsrechner sowie einen oder mehrere Teilnehmerrechner umfasst, wobei die Teilnehmerrechner einem der Zugangsrechner zugeordnet sind und über eine Funkverbindung mit dem zugeordneten drahtlosen Zugangsrechner Daten austauschen können. Die Erfindung betrifft ferner einen Zugangsrechner für ein Kommunikationsnetzwerk sowie ein Kommunikationssystem, insbesondere eines Automatisierungssystems, das einen oder mehrere der drahtlosen Zugangsrechner sowie einen oder mehrere Teilnehmerrechner umfasst, wobei die Teilnehmerrechner einem der Zugangsrechner zugeordnet sind und über eine Funkverbindung mit dem zugeordneten drahtlosen Zugangsrechner Daten austauschen können.

Für den Betrieb eines Kommunikationsnetzwerks ist der Energieverbrauch sämtlicher beteiligter Komponenten von immer größerer Bedeutung. In der nachfolgenden Beschreibung wird dies insbesondere anhand eines Kommunikationsnetzwerks eines Automatisierungssystems verdeutlicht, wobei die prinzipiellen Überlegungen auch auf andere Arten von technischen Systemen übertragen werden können.

Bei Automatisierungssystemen werden bzgl. des Energieverbrauchs insbesondere Anlagenteile, wie Antriebe und Motoren, sowie Automatisierungskomponenten, wie z.B. Feldgeräte, in die Betrachtung des Energieverbrauchs einbezogen. Die PI International (PROFIBUS und PROFINET Nutzerorganisation) bearbeitet dieses Thema unter dem Begriff "PROFIenergy" und trifft geeignete Festlegungen. Bislang wurden hierbei Möglichkeiten zur Energieeinsparung durch temporäres, teilweises Abschalten von Anlagenteilen, insbesondere während Pausen, Schichtwechseln, nachts oder am Wochenende, in Betracht gezogen. Um in dem Automatisierungssystem abgeschaltete Anlagenteile wieder in Betrieb nehmen zu können, bleibt das Kommunikationsnetzwerk des Automatisierungssystems unverändert in Betrieb. Bemühungen zur Energieeinsparung konzentrieren sich damit auf Endgeräte, bspw. Feldgeräte, Controller oder IPCs. Die Kommunikationsinfrastruktur wird lediglich in der Gestalt berücksichtigt, dass bspw. nicht benutzte Ports an einem Switch deaktiviert werden.

Die Anbindung der Anlagenteile an das Kommunikationsnetzwerk erfolgt häufig über funkbasierte Lösungen. Hierzu sind die Anlagenteile mit einem jeweiligen Teilnehmerrechner gekoppelt oder haben die Funktionalität des Teilnehmerrechners bereits integriert. Der Teilnehmerrechner (Client) stellt die für eine Funkkommunikation erforderlichen Komponenten zu einem zugeordneten Zugangsrechner (Access Point) zur Verfügung. Die Platzierung der Zugangsrechner des Kommunikationsnetzes erfolgt häufig nach dem Prinzip "trial and error". Um eine Kommunikation in jedem Fall sicher zu stellen, wird häufig auch eine Sichtverbindung zwischen den Teilnehmerrechnern und den jeweils zugeordneten Zugangsrechnern gewählt.

Es existieren auch Planungstools, wie z.B. SINEMA E, in denen die physikalische Umgebung des funkbasierten Kommunikationsnetzes nach unterschiedlichen Kriterien modelliert wird. Beispielsweise wird hierzu das Layout einer Fabrikationshalle, in der das Automatisierungssystem installiert werden soll, die darin verwendeten Materialien von Außenwänden, Zwischenwänden sowie deren Anordnung in einer Datenbank hinterlegt. Das Planungstool ermittelt unter Berücksichtigung dieser Eigenschaften die ideale Position der Zugangsrechner. Nach der Installation auf Basis der Planung wird das funkbasierte Kommunikationsnetz in der Regel durch eine manuelle Messung validiert. Zu diesem Zweck ist in den Teilnehmerrechnern in der Regel eine Funktion zur Ermittlung der Signalstärke der Funkverbindung zu dem zugeordneten Zugangsrechner enthalten.

Es ist Aufgabe der vorliegenden Erfindung, ein Verfahren anzugeben, mit dem der Betrieb eines Kommunikationsnetzwerks, insbesondere eines Automatisierungssystems, noch energieeffizienter erfolgen kann. Es ist weiterhin Aufgabe der vorliegenden Erfindung, einen Zugangsrechner und ein Kommunikationsnetzwerk, insbesondere ein Automatisierungsnetzwerk, anzugeben, welche einen energieeffizienten Betrieb unterstützen.

Diese Aufgaben werden gelöst durch ein Verfahren gemäß den Merkmalen des Patentanspruches 1, einem Zugangsrechner gemäß den Merkmalen des Patentanspruches 15 und ein Kommunikationsnetzwerk gemäß den Merkmalen des Patentanspruches 17. Vorteilhafte Ausgestaltungen sind in den abhängigen Patentansprüchen angegeben.

Die Erfindung schafft ein Verfahren zum Betrieb eines Kommunikationsnetzwerks, insbesondere eines Automatisierungssystems. Das Kommunikationsnetzwerk umfasst einen oder mehrere drahtlose Zugangsrechner sowie einen oder mehrere Teilnehmerrechner. Die Teilnehmerrechner sind einem Zugangsrechner zugeordnet und können über eine Funkverbindung mit dem zugeordneten drahtlosen Zugangsrechner Daten austauschen.

Unter einem drahtlosen Zugangsrechner wird ein Zugangsrechner verstanden, der anderen Rechnern einen Funkzugang zu dem Kommunikationsnetzwerk ermöglicht.

Erfindungsgemäß wird bei dem Verfahren für die Teilnehmerrechner eine Verbindungsinformation ermittelt, welche eine gegenwärtige Signalqualität der Funkverbindung zwischen dem Teilnehmerrechner und dem zugeordneten drahtlosen Zugangsrechner repräsentiert. Beispielsweise kann die Signalstärke des Teilnehmerrechners als Maß für die Signalqualität verwendet werden. In einem nächsten Schritt wird die Verbindungsinformation ausgewertet und es wird überprüft, ob die ermittelte Signalqualität über einem vorgegebenen Schwellwert für die Signalqualität liegt. Anschließend wird die Sendeleistung des Zugangsrechners derart reduziert, sodass die Signalqualität der diesem drahtlosen Zugangsrechner zugeordneten Teilnehmerrechner gerade über dem Schwellwert liegt.

Die Erfindung schafft weiterhin einen Zugangsrechner für ein Kommunikationssystem, insbesondere ein Automatisierungssystem der oben beschriebenen Art, wobei der Zugangsrechner dazu ausgebildet ist, eine für die Teilnehmerrechner ermittelte Verbindungsinformation zu empfangen, welche eine gegenwärtige Signalqualität der Funkverbindung zwischen dem Teilnehmerrechner und dem zugeordneten drahtlosen Zugangsrechner repräsentiert. Der Zugangsrechner ist ferner dazu ausgebildet, die Verbindungsinformation auszuwerten und zu überprüfen, ob die ermittelte Signalqualität über einem vorgegebenen Schwellwert für die Signalqualität liegt. Der Zugangsrechner ist schließlich dazu ausgebildet, die Sendeleistung des Zugangsrechners derart zu reduzieren, sodass die Signalqualität dem diesem drahtlosen Zugangsrechner zugeordneten Teilnehmerrechner gerade über dem Schwellwert liegt.

Schließlich schafft die Erfindung ein Kommunikationssystem der oben beschriebenen Art, bei dem der Zugangsrechner in erfindungsgemäßer Weise ausgebildet ist.

Der Erfindung liegt die Erkenntnis zugrunde, dass die Zugangsrechner, die auch als Access Points bezeichnet werden und mit einer oder mehreren Funkkarten ausgestattet sind, in der Regel jeweils mit der vollen Leistung senden, wodurch ein jeweiliger Zugangsrechner seine Nennleistung verbraucht. Dabei wird jedoch nicht berücksichtigt, dass die volle Sendeleistung der Funkkarte oder -karten des Zugangsrechners nicht in allen Fällen benötigt wird, um die dem Zugangsrechner zugeordneten Teilnehmerrechner funktechnisch optimal abdecken zu können. Dadurch wird in der Regel mehr Leistung verbraucht, als für den ordnungsgemäßen und performanten Betrieb des Kommunikationsnetzwerks notwendig ist. Durch die vorgeschlagene Reduzierung der Sendeleistung des Zugangsrechners derart, dass sämtliche ihm zugeordneten Teilnehmerrechner gerade noch eine gute Qualität der Funkverbindung aufweisen, kann der Energieverbrauch des Kommunikationsnetzwerks gesenkt werden.

Die Reduktion des Energieverbrauchs kann dabei auf automatisierte Weise selbsttätig durch die Komponenten des Kommunikationsnetzwerks erfolgen.

Gemäß einer zweckmäßigen Ausgestaltung wird das Verfahren iterativ durchgeführt, wobei ausgehend von einer maximalen Sendeleistung des Zugangsrechners die Sendeleistung schrittweise um einen vorgegebenen Wert oder Prozentsatz reduziert wird. Das iterative Verfahren wird dabei für jeden Teilnehmerrechner gesondert durchgeführt. Die Sendeleistung eines Zugangsrechners bestimmt sich dann nach demjenigen Teilnehmerrechner, welcher - relativ zu den anderen diesem Zugangsrechner zugeordneten Teilnehmerrechnern - die schlechteste Funkverbindung hinsichtlich der Signalqualität aufweist. Die Sendeleistung des Zugangsrechners muss verständlicherweise derart eingestellt werden, dass sämtliche der einem Zugangsrechner zugeordneten Teilnehmerrechner eine hinsichtlich der Datenübertragung ausreichende Funkverbindung aufweisen.

In einer weiteren zweckmäßigen Ausgestaltung wird die Verbindungsinformation durch einen jeweiligen Teilnehmerrechner ermittelt und zur Auswertung an den zugeordneten Zugangsrechner übermittelt. Hierdurch kann die bereits erwähnte selbsttätige Energieoptimierung des Kommunikationsnetzwerks erfolgen, da die dafür notwendigen Informationen automatisiert durch die Teilnehmerrechner erfasst und zur weiteren Verarbeitung an den zugeordneten Zugangsrechner übertragen werden. Zweckmäßigerweise wird die Verbindungsinformation in vorgegebenen Zeitabständen und/oder bei einer Veränderung der Position eines Teilnehmerrechners relativ zu dem zugeordneten Zugangsrechner an den Zugangsrechner übermittelt. Hierdurch kann eine kontinuierliche Energieoptimierung des Kommunikationsnetzwerks erfolgen.

In einer weiteren Ausgestaltung wird die Verbindungsinformation durch einen mobilen Messrechner am Ort eines jeweiligen Teilnehmerrechners ermittelt und zur Auswertung an den zugeordneten Zugangsrechner übermittelt.

Alternativ wird die Verbindungsinformation durch eine Simulation für den Ort eines jeweiligen Teilnehmerrechners ermittelt.

Zweckmäßigerweise erfolgt bei diesen beiden Ausgestaltungen durch den Messrechner eine initiale Erfassung oder Simulation der Signalqualität der Funkverbindung. Diese erfolgt insbesondere im Rahmen einer Validierung des Kommunikationsnetzwerks nach der Inbetriebnahme und wird als Basis für eine initiale Sendeleistung der Zugangsrechner verwendet. Diese Vorgehensweise ist bspw. dann vorteilhaft, wenn bereits von Beginn an eine hohe Energieoptimierung des Kommunikationsnetzwerkes erzielt werden soll. Die durch die Teilnehmerrechner ermittelten, die Signalqualität repräsentierenden, Verbindungsinformationen können dann zur weiteren Adaption des Energieverbrauchs verwendet werden. Beispielsweise kann dies vorteilhaft sein, wenn sich die Teilnehmerrechner während ihres Betriebs innerhalb der Funkabdeckung des Kommunikationsnetzwerks bewegen.

Gemäß einer weiteren zweckmäßigen Ausgestaltung erfolgt die Auswertung der Verbindungsinformation durch den Zugangsrechner. Ebenso kann vorgesehen sein, dass die Auswertung der Verbindungsinformation durch einen zentralen Administrationsrechner erfolgt, der über eine Kommunikationsinfrastruktur mit den Zugangsrechnern für einen Datenaustausch gekoppelt ist und dem die Verbindungsinformationen zur Verarbeitung von den Zugangsrechnern zur Verarbeitung zugeführt werden. Ein solcher zentraler Administrationsrechner stellt bspw. ein zentraler WLAN-Controller dar. WLAN steht für Wireless Local Area Network. Die Kommunikation zwischen dem zentralen Administrationsrechner und den mit ihm gekoppelten Zugangsrechnern kann über ein drahtgebundenes Kommunikationsnetzwerk, bspw. das Ethernet, erfolgen. Ein Vorteil dieser Vorgehensweise besteht darin, dass die Administration der Zugangsrechner hinsichtlich der Überwachung oder Optimierung des Energieverbrauchs für einen Betreiber des Kommunikationsnetzwerks vereinfacht ist. Sämtliche die Funkverbindungen betreffende Parameter können durch einen Administrator über den Administrationsrechner zentral verwaltet und gesteuert werden.

Der Administrationsrechner überträgt die Sendeleistung betreffender Konfigurationsdaten an die Zugangsrechner.

Es ist weiterhin vorgesehen, dass nach jeder Veränderung der Sendeleistung des Zugangsrechners die Teilnehmerrechner die von den Teilnehmerrechnern jeweils ermittelte Verbindungsinformation an den zugeordneten drahtlosen Zugangsrechner übertragen wird. Hierdurch ist eine kontinuierliche Überwachung der Teilnehmerrechner des Kommunikationsnetzwerks hinsichtlich der Güte der Funkverbindung sichergestellt. Insbesondere kann hierdurch vermieden werden, dass die Funkverbindung zwischen einem der Teilnehmerrechner und dem Zugangsrechner dauerhaft auf ein Maß absinkt, bei dem die Verbindungsqualität nicht mehr zuverlässig gewährleistet ist.

Es ist weiterhin zweckmäßig, wenn die Verbindungsinformation neben der Signalqualität einen Kennzeichner des verwendeten Funkkanals umfasst. Es ist weiterhin zweckmäßig, wenn die Sendeleistung der Zugangsrechner einmalig eingestellt wird. Alternativ kann die Sendeleistung der Zugangsrechner dynamisch angepasst werden. Letzteres ist insbesondere bei solchen Kommunikationsnetzwerken zweckmäßig, bei denen ein oder mehrere der Teilnehmerrechner sich innerhalb der Reichweite des Zugangsrechners bewegen.

Die Erfindung wird nachfolgend näher anhand eines Ausführungsbeispiels in der Zeichnung erläutert. Die einzige Figur zeigt in einer schematischen Darstellung ein erfindungsgemäßes Kommunikationsnetzwerk eines Automatisierungssystems.

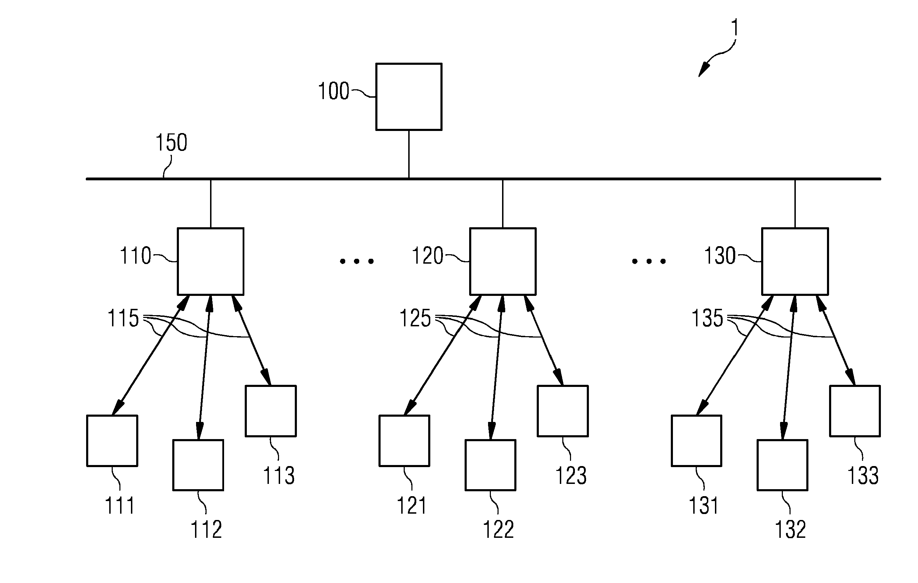

Fig. 1 zeigt ein erfindungsgemäßes Kommunikationsnetzwerk 1. Das Kommunikationsnetzwerk 1 dient bspw. der Vernetzung von Mess-, Steuer- und Regelkomponenten sowie Anlagenteilen eines Automatisierungssystems. Prinzipiell kann das Kommunikationsnetzwerk 1 auch für andere Anwendungszwecke eingesetzt werden.

Das Kommunikationsnetzwerk 1 umfasst eine Anzahl an drahtlosen Zugangsrechnern 110, 120, 130, von denen beispielhaft drei Stück in Fig. 1 dargestellt sind. Die drahtlosen Zugangsrechner 110, 120, 130, die auch als Access Points bezeichnet werden, sind über eine Kommunikationsinfrastruktur 150 miteinander und mit einem zentralen Administrationsrechner 100 verbunden. Jeder der Zugangsrechner 110, 120, 130 verfügt über wenigstens eine Funkkarte, über die er in einem vorgegebenem Frequenzbereich mit Gegenstellen kommunizieren kann. Die Kommunikationsinfrastruktur 150 kann ein standardisierter oder proprietärer Bus sein. Die Kommunikation erfolgt bevorzugt drahtgebunden. Jedoch ist auch eine drahtlose Kommunikation zwischen den Zugangsrechnern 110, 120, 130 und/oder dem zentralen Administrationsrechner 100 möglich.

Der zentrale Administrationsrechner ermöglicht eine zentrale Administration aller an die Kommunikationsinfrastruktur 150 angeschlossenen Zugangsrechner. Hierzu verwaltet der zentrale Administrationsrechner die für einen Zugangsrechner relevanten Parameter zur Festlegung seiner Funktionalität. Der zentrale Administrationsrechner 100 ist auch als zentraler WLAN (Wireless Local Area Network)-Controller bekannt und verfügt in einer dem Fachmann bekannten Weise über gültige Parametersätze zur Konfiguration der einzelnen Zugangsrechner 110, 120, 130. Ein Parametersatz umfasst bspw. Informationen über das von einem Zugangsrechner verwendete Frequenzband, den verwendeten Funkkanal sowie die Sendeleistung, über welche die Reichweite zu dem jeweiligen Zugangsrechner 110, 120, 130 zugeordneten Netzwerkteilnehmern festgelegt ist.

Der zentrale Administrationsrechner ist prinzipiell zur Verwirklichung des erfindungsgemäßen Verfahrens nicht zwingend erforderlich. Ist kein zentraler Administrationsrechner vorhanden, so können die entsprechenden Konfigurationsparameter auch direkt in den Zugangsrechnern 110, 120, 130 eingeschrieben und/oder verändert werden.

Im Ausführungsbeispiel der Fig. 1 ist jedem der Zugangsrechner 110, 120, 130 eine Anzahl an Teilnehmerrechnern 111, 112, 113 bzw. 121, 122, 123 bzw. 131, 132, 133 zugeordnet. Zwischen einem jeweiligen Zugangsrechner 110, 120, 130 und den diesen zugeordneten Netzwerkrechnern 111, 112, 113 bzw. 121, 122, 123 bzw. 131, 132, 133 besteht eine jeweilige drahtlose Funkverbindung 115 bzw. 125 bzw. 135.

Unter einem Teilnehmerrechner werden im Rahmen der vorliegenden Erfindung nicht nur Kommunikationsendgeräte, wie z.B. Laptops, Handhelds, Tablet-PCs, usw. verstanden, welche über die für eine drahtlose Verbindung notwendigen Komponenten verfügen, sondern auch solche Geräte, welche zur Anbindung einer Automatisierungskomponente dienen, welche selbst über keine Komponenten für eine Funkkommunikation verfügt. Der Netzwerkrechner stellt hier die Schnittstelle zwischen dem zugeordneten Zugangsrechner und der Automatisierungskomponente (Feldgerät, Controller, IPC) dar.

Die Anordnung der Zugangsrechner 110, 120, 130 erfolgt wahlweise nach dem Prinzip "trial and error" oder nach Maßgabe eines Funkplanungstools, wie z.B. SINEMA E. Bei letzerem wird die physikalische Umgebung, z.B. eine Halle, in dem ein drahtloses Kommunikationsnetzwerk für die Automatisierung von Komponenten bereitgestellt werden soll, nach unterschiedlichen Kriterien modelliert. Hierzu werden bspw. funktechnisch relevante Eigenschaften verschiedener Materialien von Außenwänden, Zwischenwänden, in der Halle angeordneten Maschinen aus z.B. Beton, Metall, usw. in einer Datenbank hinterlegt. Mittels der Simulationssoftware wird unter Berücksichtigung dieser Eigenschaften die ideale Position für die Zugangsrechner 110, 120, 130 ermittelt. Nach der Installation auf Basis dieser Planung wird das drahtlose Kommunikationsnetz in der Regel durch eine Messung validiert. Die Validierung erfolgt unter Verwendung von in den Teilnehmerrechnern implementierten Funktionen zur Ermittlung einer Signalqualität der Funkverbindung zwischen dem betreffenden Teilnehmerrechner und dem zugeordneten Zugangsrechner. Ein Maß für die Signalqualität ist bspw. die Signalstärke. Diese wird häufig in von Kommunikationsendgeräten bekannter Weise in Form eines Balkendiagramms oder dgl. auf einem Display dargestellt. Im Rahmen der Erfindung wird diese zur Adaption des Energieverbrauchs herangezogen.

Nach der Anordnung der Zugangsrechner 110, 120, 130 in der Installationsumgebung senden die Zugangsrechner zunächst auf den ihnen zugewiesenen Kanälen (Frequenzbereichen) mit ihrer vollen Sendeleistung. Als Folge hiervon verbrauchen die Zugangsrechner 110, 120, 130 ihre Nennleistung. Dies hat zur Folge, dass der Energieverbrauch der Kommunikationskomponenten des Kommunikationsnetzwerks maximal ist.

Da die volle Sendeleistung der in den Zugangsrechnern 110, 120, 130 enthaltenen Funkkarte oder Funkkarten nicht in allen Konfigurations- oder Betriebssituationen benötigt wird, um die Teilnehmerrechner funktechnisch optimal abdecken zu können, wird im Rahmen des vorgeschlagenen Verfahrens eine iterative Reduktion der Sendeleistung der jeweiligen Zugangsrechner 110, 120, 130 vorgenommen, sodass die Signalqualität der den jeweiligen Zugangsrechnern zugeordneten Teilnehmerrechner noch ausreichend ist, um eine Kommunikation sicher zu stellen.

Die Energieoptimierung des Betriebs der Zugangsrechner 110, 120, 130 des Kommunikationsnetzwerks 1 erfolgt iterativ.

Gemäß einer ersten Variante übertragen die Teilnehmerrechner im Zuge der Validierung des Kommunikationsnetzwerks 1 eine Verbindungsinformation an den jeweils zugeordneten drahtlosen Zugangsrechner. Die Verbindungsinformation repräsentiert die gegenwärtige Signalqualität, bspw. Signalstärke, der betreffenden Funkverbindung zwischen einem jeweiligen Teilnehmerrechner und dem zugeordneten drahtlosen Zugangsrechner. Die durch die Zugangsrechner gesammelten Verbindungsinformationen werden von sämtlichen der Zugangsrechner 110, 120, 130 an den zentralen Administrationsrechner 100 zur weiteren Verarbeitung übertragen.

Der zentrale Administrationsrechner 100 überprüft, ob die jeweils ermittelte Signalqualität über einem vorgegebenen Schwellwert für die Signalqualität liegt. Dieser Vergleich wird für jede Funkverbindung zwischen einem Teilnehmerrechner und dem zugeordneten Zugangsrechner durchgeführt. Erkennt der zentrale Administrationsrechner 100 Signalqualitäten bzw. Signalstärken, die über vorgegebenen Sollwerten liegen, so nimmt der zentrale Administrationsrechner 100 eine Änderung an der Konfiguration des betreffenden Zugangsrechners im Hinblick auf die Sendeleistung vor.

Die Reduktion der Sendeleistung kann dabei schrittweise oder prozentual erfolgen. Bei jedem Optimierungsschritt, d.h. jeder Änderung der Konfiguration der Sendeleistung eines jeweiligen Zugangsrechners wird an den zentralen Administrationsrechner als Bestätigung der Konfigurationsänderung vom betreffenden Zugangsrechner die von den zugeordneten Teilnehmerrechnern gemeldeten Verbindungsinformationen übertragen. Die Reduktion der Sendeleistung der Zugangsrechner erfolgt dabei derart, dass die Signalqualität aller diesem drahtlosen Zugangsrechner zugeordneten Teilnehmerrechner gerade über dem Schwellwert liegt. Dies bedeutet, diejenige Funkverbindung, welche die geringste Signalqualität aufweist, gibt die maximale Reduktion der Sendeleistung des Zugangsrechners vor. Auf diese Weise wird sichergestellt, dass trotz reduzierter Sendeleistung eine Funkverbindung vorgegebener Qualität zwischen sämtlichen Teilnehmerrechnern und dem Zugangsrechner gegeben ist.

Der zentrale Administrationsrechner kann die Parametersätze der Zugangsrechner selbstständig und iterativ an die vorher definierten Schwellwerte anpassen und damit eine Selbstoptimierung der Sendeleistungen der an die Kommunikationsinfrastruktur angeschlossenen Zugangsrechner realisieren. Diese Optimierung kann neben den reinen Signalpegeln, bezogen auf den jeweils eingestellten Funkkanal, auch die Verwendung unterschiedlicher Funkkanäle einschließen.

Die Ermittlung der Verbindungsinformation durch die Teilnehmerrechner ermöglicht eine dynamische Anpassung an die Gegebenheiten des Umfelds des Kommunikationsnetzwerks 1. Dies ist insbesondere bei mobilen Teilnehmerrechnern von Vorteil.

Für die Validierung des Kommunikationsnetzwerks kann initial auch ein Messrechner verwendet werden. Dieser wird innerhalb des von dem zu überprüfenden Zugangsrechner abgedeckten Funkfelds bewegt. Der Messrechner verharrt bspw. so lange auf seiner Position, bis der gewünschte Signalpegel erreicht ist. Dies bedeutet mit anderen Worten, dass bei der Verwendung des Messrechners an einem jeweiligen Messort eine unmittelbare Reduktion der Sendeleistung des zugeordneten Zugangsrechners erfolgt, um die maximale Sendeleistungsreduktion ermitteln zu können. Die Orte, an denen eine Signalqualitätsmessung mittels des Messrechners erfolgt, entsprechen vorzugsweise den Orten, an denen die Teilnehmerrechner installiert sind.

Für eine einfache und zuverlässige Durchführung des Optimierungsprozesses ist es vorteilhaft, wenn der für die Validierung verwendete Messrechner über eine geeignete Anzeige verfügt, welche durch einen Bediener des Messrechners interpretiert werden kann. Beispielsweise kann durch eine Kontrollleuchte signalisiert werden, dass die Signalqualität ausreichend ist. Mit dem Erlöschen der Kontrollleuchte wird hingegen signalisiert, dass die Sendeleistung zu gering ist, um eine Kommunikation zu dem Messrechner aufrecht zu erhalten. Mittels der Kontrollleuchte kann somit angezeigt werden, dass der vorab definierte Schwellwert für die Signalqualität erreicht ist. Zusätzlich wird "Handshake" zwischen dem zentralen Administrationsrechner und den Teilnehmerrechner, dessen Ort durch den Messrechner validiert wird, ausgetauscht. Der Messrechner verharrt somit so lange auf einer Messposition, so lange dieses "Handshake"-Signal fehlt. Nach Erhalt der positiven Bestätigungsmeldung, dass bei geringstmöglicher Sendeleistung des überprüften Zugangsrechners eine bestimmte Signalqualität gegeben ist, kann der Messvorgang an anderer Stelle fortgesetzt werden.

Auf diese Weise ist es möglich, feste Installationspunkte oder auch abzudeckende Flächen zu überprüfen.

Es versteht sich, dass bei einem festgestellten zu geringen Signalpegel bei der Validierung eines bestimmten Teilnehmerrechners die Sendeleistung des zugeordneten Zugangsrechners auch wieder erhöht werden kann. Wie erläutert, gibt der Teilnehmerrechner mit der schlechtesten Funkverbindung die minimale Sendeleistung des Zugangsrechners vor.

In einer Ausgestaltung kann eine dynamische Anpassung der Sendeleistung der Zugangsrechner an mobile Teilnehmerrechner erfolgen. Hierzu ist es zweckmäßig, wenn ein mobiler Teilnehmerrechner seinen Signalpegel kontinuierlich oder in definierten Abständen an den Zugangsrechner überträgt. Diese an den zentralen Administrationsrechner weitergeleitete Verbindungsinformation kann dann wiederum mit den vorgegebenen Schwellwerten verglichen werden, sodass eine Nachjustierung der Sendeleistung erfolgen kann. Dies kann bspw. dazu führen, dass während der Bewegung eines Teilnehmerrechners die Sendeleistung des Zugangsrechners temporär erhöht und anschließend wieder reduziert wird.

Die initiale Festlegung der Sendeleistung der Zugangsrechner kann in einer weiteren Alternative auch durch Simulation festgelegt werden. Eine solche Simulation kann bspw. in dem eingangs bereits erwähnten Planungstool SINEMA E erfolgen, indem iterativ die ideale Sendeleistung für die beteiligten Teilnehmerrechner ermittelt wird. Diese im Rahmen der Simulation ermittelten Parameter können dann in die Zugangsrechner übertragen oder eingegeben werden. Vorzugsweise erfolgt anschließend eine Validierung des Kommunikationsnetzwerkes durch Messung, wie oben beschrieben. Im Rahmen der Messung kann eine weitere Optimierung der Sendeleistungen erfolgen.

Im Ergebnis ergibt sich ein optimierter Leistungsbedarf für ein drahtloses Kommunikationsnetzwerk. Das Kommunikationsnetzwerk bzw. die hierin verwendeten Funkverbindungen können auf WLAN gemäß IEEE 802.3 oder auf anderen Technologien, wie z.B. Bluetooth, Wireless HART, Zellnetze (GSM, OMTS, etc.) basieren.

Das Verfahren ist für die verwendete Infrastruktur ohne weitere Voraussetzungen anwendbar. Es ist für beliebige funkbasierte Kommunikationsnetze einsetzbar, für die ein Planungstool verfügbar ist.

Für die Optimierung der jeweiligen Sendeleistungen sollten die Teilnehmerrechner über eine Funktion zur Ermittlung der

Signalstärke verfügen. Verfügen die Teilnehmerrechner über eine derartige Funktion nicht, ist es ggf. ausreichend, die entsprechende Information mit einem handbedienten Messrechner vorzunehmen.

Ein weiterer Vorteil des Verfahrens besteht darin, dass sich das Verfahren ohne aufwändige Messverfahren, z.B. Signal-Rauschabstand, realisieren lässt.

### Bezugszeichenliste

- 1: Kommunikationsnetzwerk
- 110: Zugangsrechner
- 111: Teilnehmerrechner
- 112: Teilnehmerrechner
- 113: Teilnehmerrechner
- 115: Funkverbindung
- 120: Zugangsrechner
- 121: Teilnehmerrechner
- 122: Teilnehmerrechner
- 123: Teilnehmerrechner
- 125: Funkverbindung
- 130: Zugangsrechner
- 131: Teilnehmerrechner
- 132: Teilnehmerrechner
- 133: Teilnehmerrechner
- 135: Funkverbindung
- 150: Kommunikationsinfrastruktur

## Patentansprüche

1. Verfahren zum Betrieb eines Kommunikationsnetzwerks (1), insbesondere eines Automatisierungssystems, wobei das Kommunikationsnetzwerk (1) einen oder mehrere drahtlose Zugangsrechner (110, 120, 130) sowie einen oder mehrere Teilnehmerrechner (111, 112, 113; 121, 122, 123; 131, 132, 133) umfasst, wobei die Teilnehmerrechner (111, 112, 113; 121, 122, 123; 131, 132, 133) einem der drahtlosen Zugangsrechner (110, 120, 130) zugeordnet sind und über eine Funkverbindung (115; 125; 135) mit dem zugeordneten drahtlosen Zugangsrechner (110, 120, 130) Daten austauschen können, bei dem
- für die Teilnehmerrechner (111, 112, 113; 121, 122, 123; 131, 132, 133) eine Verbindungsinformation ermittelt wird, welche eine gegenwärtige Signalqualität der Funkverbindung zwischen dem Teilnehmerrechner (111, 112, 113; 121, 122, 123; 131, 132, 133) und dem zugeordneten drahtlosen Zugangsrechner (110, 120, 130) repräsentiert;
- die Verbindungsinformation ausgewertet und überprüft wird, ob die ermittelte Signalqualität über einem vorgegebenen Schwellwert für die Signalqualität liegt;
- die Sendeleistung des Zugangsrechners (110, 120, 130) derart reduziert wird, so dass die Signalqualität der diesem drahtlosen Zugangsrechner (110, 120, 130) zugeordneten Teilnehmerrechner (111, 112, 113; 121, 122, 123; 131, 132, 133) gerade über dem Schwellwert liegt.

2. Verfahren nach Anspruch 1, bei dem das Verfahren iterativ durchgeführt wird, wobei ausgehend von einer maximalen Sendeleistung des Zugangsrechners (110, 120, 130) die Sendeleistung schrittweise um einen vorgegebenen Wert oder Prozentsatz reduziert wird.

3. Verfahren nach Anspruch 1 oder 2, bei dem die Verbindungsinformation durch einen jeweiligen Teilnehmerrechner (111, 112, 113; 121, 122, 123; 131, 132, 133) ermittelt und zur Auswertung an den zugeordneten Zugangsrechner (110, 120, 130) übermittelt wird.

4. Verfahren nach Anspruch 3, bei dem die Verbindungsinformation in vorgegebenen Zeitabständen und/oder bei einer Veränderung der Position eines Teilnehmerrechners (111, 112, 113; 121, 122, 123; 131, 132, 133) relativ zu dem zugeordneten Zugangsrechner (110, 120, 130) an den Zugangsrechner (110, 120, 130) übermittelt wird.

5. Verfahren nach einem der vorhergehenden Ansprüche, bei dem die Verbindungsinformation durch einen mobilen Messrechner am Ort eines jeweiligen Teilnehmerrechners (111, 112, 113; 121, 122, 123; 131, 132, 133) ermittelt und zur Auswertung an den zugeordneten Zugangsrechner (110, 120, 130) übermittelt wird.

6. Verfahren nach einem der Ansprüche 1 bis 4, bei dem die Verbindungsinformation durch eine Simulation für den Ort eines jeweiligen Teilnehmerrechners (111, 112, 113; 121, 122, 123; 131, 132, 133) ermittelt wird.

7. Verfahren nach Anspruch 5 oder 6, bei dem durch den Messrechner eine initiale Erfassung oder Simulation der Signalqualität der Funkverbindung, insbesondere im Rahmen einer Validierung des Kommunikationsnetzwerks nach der Inbetriebnahme erfolgt, welche als Basis für eine initiale Sendeleistungseinstellung der Zugangsrechner (110, 120, 130) verwendet wird.

8. Verfahren nach einem der vorhergehenden Ansprüche, bei dem die Auswertung der Verbindungsinformation durch den Zugangsrechner (110, 120, 130) erfolgt.

9. Verfahren nach einem der vorhergehenden Ansprüche, bei dem die Auswertung der Verbindungsinformation durch einen zentralen Administrationsrechner (100) erfolgt, der über eine Kommunikationsinfrastruktur (150) mit den Zugangsrechnern (110, 120, 130) für einen Datenaustausch gekoppelt ist und dem die Verbindungsinformationen zur Verarbeitung von den Zugangsrechnern (110, 120, 130) zur Verarbeitung zugeführt werden.

10. Verfahren nach Anspruch 9, bei dem der Administrationsrechner (100) die Sendeleistung betreffende Konfigurationsdaten an die Zugangsrechner (110, 120, 130) überträgt.

11. Verfahren nach einem der vorhergehenden Ansprüche, bei dem nach jeder Veränderung der Sendeleistung des Zugangsrechners (110, 120, 130) die Teilnehmerrechner (111, 112, 113; 121, 122, 123; 131, 132, 133) die von den Teilnehmerrechnern (111, 112, 113; 121, 122, 123; 131, 132, 133) jeweils ermittelte Verbindungsinformation an den zugeordneten drahtlosen Zugangsrechner (110, 120, 130) übertragen wird.

12. Verfahren nach einem der vorhergehenden Ansprüche, bei dem die Verbindungsinformation neben der Signalqualität einen Kennzeichner des verwendeten Funkkanals umfasst.

13. Verfahren nach einem der vorhergehenden Ansprüche, bei dem die Sendeleistung der Zugangsrechner (110, 120, 130) einmalig eingestellt wird.

14. Verfahren nach einem der Ansprüche 1 bis 12, bei dem die Sendeleistung der Zugangsrechner (110, 120, 130) dynamisch angepasst wird.

15. Zugangsrechner für ein Kommunikationsnetzwerk, insbesondere ein Automatisierungssystem, das einen oder mehrere der drahtlosen Zugangsrechner (110, 120, 130) sowie einen oder mehrere Teilnehmerrechner (111, 112, 113; 121, 122, 123; 131, 132, 133) umfasst, wobei die Teilnehmerrechner (111, 112, 113; 121, 122, 123; 131, 132, 133) einem der Zugangsrechner (110, 120, 130) zugeordnet sind und über eine Funkverbindung (115; 125; 135) mit dem zugeordneten drahtlosen Zugangsrechner (110, 120, 130) Daten austauschen können, wobei der Zugangsrechner dazu ausgebildet ist,
- eine für die Teilnehmerrechner (111, 112, 113; 121, 122, 123; 131, 132, 133) ermittelte Verbindungsinformation zu empfangen, welche eine gegenwärtige Signalqualität der Funkverbindung zwischen dem Teilnehmerrechner (111, 112, 113; 121, 122, 123; 131, 132, 133) und dem zugeordneten drahtlosen Zugangsrechner (110, 120, 130) repräsentiert;
- die Verbindungsinformation auszuwerten und zu überprüfen, ob die ermittelte Signalqualität über einem vorgegebenen Schwellwert für die Signalqualität liegt;
- die Sendeleistung des Zugangsrechners (110, 120, 130) derart zu reduzieren, so dass die Signalqualität der diesem drahtlosen Zugangsrechner (110, 120, 130) zugeordneten Teilnehmerrechner (111, 112, 113; 121, 122, 123; 131, 132, 133) gerade über dem Schwellwert liegt.

16. Zugangsrechner nach Anspruch 15, der weiter dazu ausgebildet ist, das Verfahren gemäß einem der Ansprüche 2 bis 14 auszuführen.

17. Kommunikationsnetzwerk, insbesondere Automatisierungssystem, das einen oder mehrere der drahtlosen Zugangsrechner (110, 120, 130) sowie einen oder mehrere Teilnehmerrechner (111, 112, 113; 121, 122, 123; 131, 132, 133) umfasst, wobei die Teilnehmerrechner (111, 112, 113; 121, 122, 123; 131, 132, 133) einem der Zugangsrechner (110, 120, 130) zugeordnet sind und über eine Funkverbindung (115; 125; 135) mit dem zugeordneten drahtlosen Zugangsrechner (110, 120, 130) Daten austauschen können, wobei der Zugangsrechner gemäß Anspruch 15 oder 16 ausgebildet ist.
